# FASCICULE DE BREVET EUROPEEN

(11) **EP 0 404 682 B1**
(45) Date de publication et mention de la délivrance du brevet: **12.04.1995**
(21) Numéro de dépôt: 90401763.9
(22) Date de dépôt: 21.06.1990
(51) Int. Cl.: G01N 33/483, C12Q 1/68, G06T 1/00

(54) **Procédé et dispositif de séquençage d'un polynucléotide**
Verfahren und Vorrichtung zur Sequenzierung eines Polynukleotids
Method and apparatus for the sequencing of a polynucleotide

(30) Priorité: 21.06.1989 FR 8908284
(43) Date de publication de la demande: 27.12.1990
(73) Titulaire: Fourmentin-Guilbert, Jean Ernest Raymond, F-93160 Noisy le Grand (FR)
(72) Inventeur: Fourmentin-Guilbert, Jean Ernest Raymond, F-93160 Noisy le Grand (FR)

(56) Documents cités:
- EP-A- 0 397 416
- JOURNAL OF APPLIED PHYSICS, vol. 61, no. 2, 15 janvier 1987, American Institute of Physics, New York, NY (US); P.K. HANSMA et al., pp. R1-R23#
- PROCEEDINGS OF THE ANNUAL INTERNATIONAL CONFERENCE OF THE IEEE ENGINEERING IN MEDICINE & BIOLOGY SOCIETY,New Orleans, LA (US), 04-07 novembre 1988, part 2/4, "Modeling and Biological Interfaces", vol. 10, IEEE, New York, NY (US); S. HAMEROFF et al., pp. 1009-1011#
- JOURNAL OF VACUUM SCIENCE & TECHNOLOGY/SECTION A, vol.6, no. 3, part II, second series, mai/juin 1988, American Vacuum Society, Woodbury, NY (US); O. MARTI et al., pp. 2089-2092#
- SOVIET TECHNICAL PHYSICS LETTERS, vol. 13, no. 8, août 1987, American Institute of Physics, New York, NY (US); S.I. VASIL'EV et al., pp. 391-393#

## Description

La présente invention concerne un procédé et un dispositif de séquençage d'un polynucléotide tel qu'un gène.

On sait que l'information génétique propre à chaque être vivant, son génome, est contenue dans ses chromosomes, lesquels sont constitués de longues chaînes d'acides nucléiques ayant la structure générale suivante : 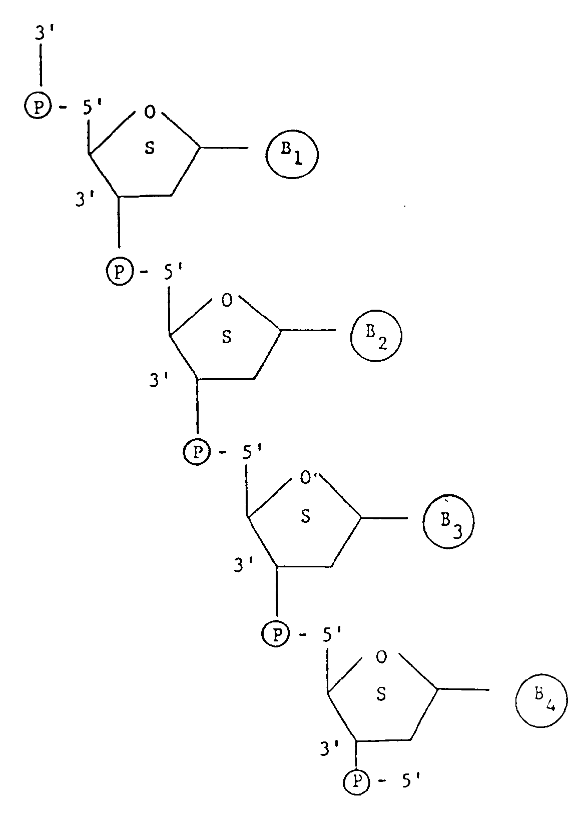
où P est le groupement phosphoryle, S est un ribose dans les acides ribonucléiques (ARN) ou un désoxyribose dans les acides désoxyribonucléiques (ADN), et où les groupes Bᵢ sont des bases azotées.

Tous ces acides sont donc constitués par un enchaînement de nucléotides possédant soit une base purique (adénine ou guanine), soit une une base pyrimidique (cytosine ou l'uracile dans l'ARN et cytosine ou thymine dans l'ADN).

Le séquençage d'un fragment d'acide nucléique est l'opération consistant à déterminer la succession des bases des nucléotides dont il est constitué.

Ce séquençage est particulièrement utile, notamment pour une meilleure connaissance des maladies d'origine génétique, mais également dans tous les domaines du génie génétique dont les applications sont, on le sait, de plus en plus nombreuses.

Tous les procédés de séquençage actuellement connus, même s'ils sont fiables, présentent l'inconvénient de relever des techniques du génie génétique, et par conséquent d'être toujours très lents et fastidieux, ce qui est un handicap considérable lorsque l'on songe que le génome humain par exemple, c'est-à-dire l'ensemble de ses gènes, est constitué d'environ trois milliards de nucléotides.

Les principales méthodes de séquençage utilisées sont des méthodes manuelles dérivées soit de la méthode de SANGER soit de la méthode MAXAM-GILBERT.

Ces procédés sont maintenant bien au point. Mais si des kits de séquençage fondés sur ces principes existent dans le commerce, ils sont néanmoins lourds à mettre en oeuvre, lents à réaliser du fait de l'étape d'électrophorèse. Ils présentent en outre l'inconvénient de nécessiter la multiplication du fragment que l'on souhaite séquencer afin d'en obtenir une quantité suffisante pour l'ensemble des opérations à réaliser.

On a donc cherché à automatiser les procédés de séquençage.

L'un de ces procédés automatiques utilise des marqueurs fluorescents caractéristiques de chaque base.

On découpe comme précédemment le brin que l'on souhaite séquencer, et on fait migrer les fragments ainsi obtenus dans un seul gel d'électrophorèse éclairé à l'aide d'un laser à argon. Il suffit par conséquent d'enregistrer au passage de chaque fragment, la couleur de ce fragment pour en déduire la base à laquelle il correspond.

Toutefois, on doit là encore procéder à un clonage du brin à séquencer, à son découpage en fragments et à un procédé d'électrophorèse.

La présente invention vise à pallier ces inconvénients en fournissant un procédé automatique de séquençage d'un polynucléotide qui ne nécessite pas de clonage de ce fragment, qui s'affranchit des procédés d'électrophorèse, et qui est en outre non destructif, ce qui présente l'avantage qu'il peut être répété plusieurs fois à des fins de vérification.

La demande de brevet EP-A-0397416, publiée après le dépôt de la présente demande, décrit un procédé d'obtention de l'image de macromolécules placées sur une surface par balayage à haute résolution de ladite surface à l'aide d'un microscope à balayage à effet tunnel.

L'observation des structures de l'ADN natif (double brin) avec le microscope à effet tunnel a été décrite par Beebe T.P. et al., Nature, Vol.243, pp.370-372 (20 Janvier 1989).

L'invention a tout d'abord pour objet un procédé de séquençage automatique d'un polynucléotide tel qu'un gène, caractérisé par le fait que l'on dispose ledit polynucléotide sur un substrat dont la rugosité de surface est de l'ordre d'un diamètre atomique, que l'on effectue une analyse ponctuelle de la surface du substrat portant ledit polynucléotide avec une résolution inférieure à un diamètre atomique, que l'on reconstitue la forme de chaque base successive dudit polynucléotide à partir des données recueillies au cours de l'analyse, que l'on reconnait ladite forme, et que l'on mémorise l'information ainsi obtenue.

Le procédé selon l'invention repose par conséquent sur une détection directe de la forme de chaque base successive du fragment à séquencer, sur la détermination de cette forme, et sur sa reconnaissance automatique.

La distinction entre un noyau purique et un noyau pyrimidique ne présente pas de difficulté puisqu'un noyau purique se présente sous la forme du cycle à neuf atomes ci-dessous: 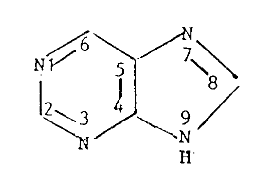
et le noyau pyrimidique sous la forme du cycle à six atomes ci-dessous:

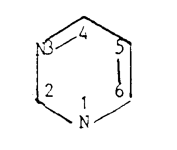

Les bases thymine se distinguent des bases cytosine par la présence, dans les premières, du radical méthyle placé en C₅. De même, les bases guanine se distinguent des bases adénine par la présence, dans les premières, d'un atome d'azote placé en C₂.

On pourra également, afin de rendre cette distinction plus aisée, ajouter un marqueur caractéristique sur l'une des deux bases de type purique et l'une des deux bases de type pyrimidique du polynucléotide à séquencer.

Dans le cas d'un fragment d'acide désoxyribonucléique on pourra ainsi marquer soit les bases adénine soit les bases thymine d'une part, et soit les bases cytosine soit les bases guanine d'autre part.

Le procédé selon l'invention est donc un procédé purement physique éliminant par voie de conséquence les inconvénients des procédés traditionnels.

Dans un mode de réalisation particulier de l'invention, l'analyse ponctuelle précitée s'effectue en balayant ladite surface avec une résolution inférieure à un diamètre atomique à l'aide d'une sonde, par exemple la sonde d'un microscope à effet tunnel ou à force atomique, apte à détecter une dénivellation par rapport à la surface inférieure à un diamètre atomique, et en reconstituant la forme de chaque base successivement rencontrée au cours du balayage à partir des données de ce balayage.

Le microscope à effet tunnel est connu. On n'en rappellera donc que brièvement le principe de fonctionnement.

Si l'on approche une sonde suffisamment fine à proximité immédiate d'une surface, et si l'on applique une différence de potentiel entre la sonde et la surface, il nait un courant électrique par effet tunnel, ce courant électrique dépendant très fortement de la densité électronique au niveau de la pointe de la sonde, c'est-à-dire de la distance entre cette pointe et la surface.

Le microscope à effet tunnel utilise par conséquent un balayage en X et Y de la surface à analyser à l'aide d'une sonde, par exemple à l'aide de dispositifs piézo-électriques, et au cours de ce balayage, à déplacer la sonde verticalement en Z, également à l'aide d'un dispositif piézo-électrique, de manière à obtenir un courant d'intensité constante. La tension d'asservissement pour obtenir cette intensité constante est donc représentative des dénivellations rencontrées au cours du balayage.

Il est bien entendu possible de balayer à l'aide de la sonde l'ensemble du substrat sur lequel est disposé le fragment à séquencer.

Toutefois, afin d'obtenir une analyse plus rapide, il est possible de piloter le balayage en X et en Y, de manière à suivre ce fragment, par exemple en arrêtant le balayage primaire à une certaine distance telle que 100 nm ou 1 micron après le début d'un parcours monotone sur la surface du substrat, qui peut être constitué par un cristal présentant une surface sensiblement sans défaut.

Il est encore possible plus simplement, de disposer le fragment dans une rainure formée dans le substrat, et d'effectuer l'analyse uniquement sur la largeur de cette rainure.

On peut notamment disposer le polynucléotide sur le substrat en le faisant migrer par gradient de potentiel dans une solution baignant ce substrat.

On peut dans ce cas, afin d'étaler le polynucléotide pour faciliter la reconnaissance de forme, accrocher une de ses extrémités en un point du substrat, par exemple en greffant à cette extrémité et sur le substrat des groupes fonctionnels qui, soit portent des charges électrostatiques, soit sont susceptibles de former une liaison covalentes.

De préférence dans les deux cas on greffe en fait le groupement fonctionnel à l'extrémité d'une séquence prédéterminée synthétisée elle-même à l'extrémité du polynucléotide à séquencer proprement dit.

On peut aussi greffer un groupe fonctionnel de charge opposée à l'extrémité libre du polynucléotide.

Il est également possible d'effectuer l'élongation et la migration du polynucléotide, en le plaçant dans le courant d'un fluide dont on contrôle la vitesse de déplacement.

Cette vitesse dépend du fluide utilisé. Elle sera par exemple plus importante avec un gaz, comme de l'air, qu'avec un liquide comme par exemple de l'eau.

Il s'agit de communiquer au polynucléotide une énergie cinétique suffisante pour étaler le polynucléotide, tout en minimisant les risques de sa fragmentation.

Le polynucléotide est placé dans une rainure du substrat qui va servir à son analyse.

Une des extrémités du polynucléotide est solidarisée, par exemple avec le substrat. La rainure est couverte avec une lamelle, de façon à constituer un canal d'écoulement du fluide.

Une pièce en forme d'entonnoir, comportant une ouverture permettant le passage du fluide est placée à l'entrée du canal pour permettre l'injection du fluide.

On procède à l'injection du fluide pendant une période de temps suffisante pour obtenir l'élongation désirée. Une fois l'élongation désirée atteinte, on enlève la pièce en forme d'entonnoir et la lamelle et l'on poursuit les opérations de séquençage.

Il est également possible d'effectuer l'élongation du polynucléotide par centrifugation.

On utilisera de préférence pour le séquençage un polynucléotide monobrin afin de rendre plus aisée la reconnaissance de forme.

On peut à cet effet partir d'un polynucléotide double-brin, et après accrochage de son extrémité séparer les deux brins, couper l'un des brins à son extrémité, et poursuivre la migration de ce dernier brin jusqu 'à son éloignement complet du brin restant accroché.

La séquence synthétisée entre l'extrémité du polynucléotide et le groupement fonctionnel répond à un certain nombre de fonctions.

Tout d'abord elle permet la reconnaissance du sens de lecture de 5′ vers 3′ ou inversement.

Par ailleurs elle permet l'identification du premier nucléotide significatif du brin à lire.

Elle permet également une liaison covalente avec le groupe fonctionnel d'accrochage greffé à son extrémité.

Dans le cas où l'on part d'un polynucléotide double brin, elle permet en outre une coupure spécifique d'un des brins par un enzyme de restriction adapté.

Enfin, elle permet une certaine flexibilité entre le groupe fonctionnel et le polynucléotide.

Le polynucléotide, la séquence synthétisée et le groupe fonctionnel peuvent être soit déposés directement sur le substrat en un emplacement précis à l'aide d'une micro-pipette, soit accrochés directement par l'intermédiaire des groupes fonctionnels par trempage du substrat dans une solution contenant un grand nombre de polynucléotides identiques.

Dans le premier cas la micro-goutte est par exemple disposée dans une rainure de quelques microns de largeur, et possédant une profondeur d'environ 100 nanomètres.

La rainure est remplie d'une solution conductrice.

A chaque extrémité se trouve une électrode reliée à une source de tension, de telle sorte qu'un champ électrique de polarité convenable s'établisse dans la solution entre les électrodes.

Sous l'effet du champ électrique, l'ensemble constitué par le polynucléotide (chargé au préalable en conséquence), la séquence d'accrochage et le groupe fonctionnel, migre vers le pôle de signe opposé à la polarisation du polynucléotide.

Au passage de la barrière constituée des groupes fonctionnels fixés sur le substrat, le groupe fonctionnel mobile fixé au polynucléotide forme une liaison électrostatique ou covalente, et reste par conséquent accroché au groupe fonctionnel fixe. Après cet accrochage, le reste du polynucléotide continue à s'étirer sous l'effet du champ électrique.

Une fois l'élongation terminée, et dans le cas où l'on est parti d'un polynucléotide double brin, on chauffe de manière à dénaturer les liaisons de ce double brin, les deux monobrins en résultant restant accrochés au groupe fonctionnel.

On fait agir ensuite un enzyme de restriction spécifique d'un brin de la chaîne d'attache afin de couper un de ceux-ci. En maintenant la différence de potentiel, on poursuit la migration du polynucléotide monobrin détaché jusqu'à son éloignement complet du monobrin restant attaché au substrat.

Dans le cas d'un accrochage direct sur la surface, on utilise le même mécanisme d'élongation, mais on évite la difficulté consistant à placer de façon très précise la micro-goutte sur le substrat.

Par contre il est nécessaire de multiplier au préalable le polynucléotide à séquencer afin d'obtenir une probabilité d'accrochage raisonnable des groupes fonctionnels liés au substrat d'une part et au polynucléotide d'autre part.

Dans les deux cas on évapore ensuite lentement la solution soit par micro-succion du solvant, soit par chauffage, soit en utilisant les deux procédés.

La présente invention a également pour objet un dispositif de séquençage automatique d'un polynucléotide tel qu'un gène, caractérisé par le fait qu'il comprend en combinaison un substrat dont la rugosité de surface est de l'ordre d'un diamètre atomique, des moyens d'analyse ponctuelle de ladite surface ayant une résolution inférieure à un diamètre atomique, des moyens pour reconstituer les formes des bases successives dudit polynucléotide à partir des données de l'analyse, des moyens pour reconnaître lesdites formes, et des moyens pour mémoriser l'information ainsi obtenue.

Les moyens d'analyse peuvent notamment comprendre une sonde apte à détecter une dénivellation par rapport à ladite surface inférieure à un diamètre atomique, et des moyens de balayage pour amener ladite sonde à balayer ladite surface avec une résolution inférieure à un diamètre atomique, par exemple la sonde et les moyens de balayage d'un microscope à effet tunnel.

Bien entendu, des moyens d'analyse plus grossiers, ayant par exemple une résolution de l'ordre de la dizaine de nanomètres, pourront être utilisés en premier lieu pour localiser le polynucléotide sur le substrat.

Comme on l'a vu ci-dessus, le substrat est de préférence un substrat cristallin tel que du graphite présentant une surface sensiblement sans défaut, et peut comporter une rainure pour loger le polynucléotide et faciliter le balayage.

Le substrat peut également comporter des repères gravés à des intervalles prédéterminés le long de la rainure.

Ces repères permettent d'effectuer successivement plusieurs cycles de balayage, chaque cycle couvrant une longueur donnée de la rainure, et de se recaler d'un cycle à l'autre.

Le substrat peut également comprendre des moyens d'accrochage et d'étalement du polynucléotide à séquencer.

Les moyens de reconstitution et de reconnaissance de forme peuvent dans un mode particulier de l'invention comprendre une unité de traitement agencée pour reconstituer la surface en trois dimensions, et des moyens de reconnaissance de formes tridimensionnelles.

On connaît des procédés permettant de reconstituer une surface en trois dimensions à partir des coordonnées dans ces trois dimensions d'un ensemble de points de cette surface. On connaît également des moyens de reconnaissance de formes tridimensionnelles, (les sous-unités ribose et base restent dans une configuration spatiale rigide bien déterminée).

Dans un autre mode de réalisation, les moyens de reconstitution et de reconnaissance de forme comprennent une unité de traitement agencée pour reconstituer une image en plan de la surface, des moyens de traitement d'images, et des moyens de reconnaissance d'images.

Dans ce cas, on forme par conséquent à partir des données de l'analyse de la surface, et du polynucléotide qu'elle supporte, une image en plan de cette surface (qui peut bien entendu n'être constituée que d'une succession de pixels dans la mémoire d'un ordinateur), on traite cette image de manière à isoler les atomes des bases successives du polynucléotide en éliminant les atomes du substrat ainsi que ceux des groupements désoxyribose (ou des groupements ribose dans le cas d'ARN) et ceux des groupements phosphoryle. Les images des bases successives ayant ainsi été reconstituées, on peut les reconnaître automatiquement.

L'invention a aussi pour objet un procédé d'obtention d'une macromolécule caractérisé par le fait qu'il comporte les étapes consistant à :
- séquencer un polynucléotide par un procédé selon la présente invention,
- identifier un gène de ce polynucléotide correspondant à ladite macromolécule,
- fabriquer le gène identifié, en utilisant les éléments obtenus lors de l'étape de séquençage du polynucléotide.

On décrira maintenant à titre d'exemple non limitatif un mode de réalisation particulier de l'invention en référence aux dessins annexés dans lesquels :
- La figure 1 est un schéma d'ensemble du dispositif selon l'invention,
- La figure 2 est une vue schématique en perspective du substrat, du polynucléotide et de la sonde.
- La figure 3 est une vue de dessus à très grande échelle de la rainure du substrat et du polynucléotide.
- La figure 4 représente l'enregistrement effectué par le microscope à effet tunnel, et
- La figure 5 représente l'image obtenue après traitement du signal délivré par le microscope.

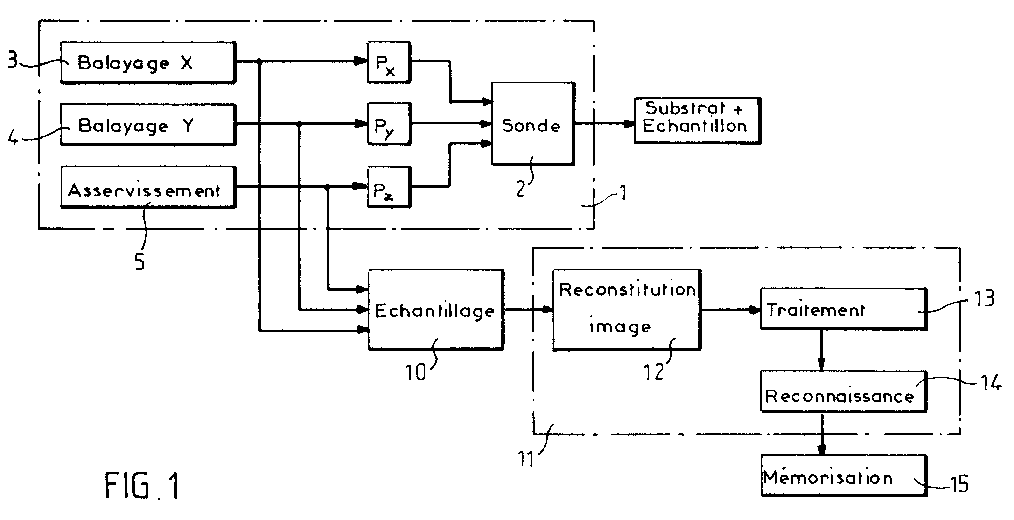

La figure 1 représente d'une manière générale en 1 un microscope à effet tunnel. Ce microscope comprend une sonde 2 constituée par une aiguille dont l'extrémité forme une pointe monoatomique et dont les déplacements sont assurés au moyen de cristaux piézo-électriques P_{X}, P_{Y} et P_{Z}.

Les cristaux P_{X} et P_{Y} sont commandés respectivement par une unité 3 de balayage en X, et une unité 4 de balayage en Y.

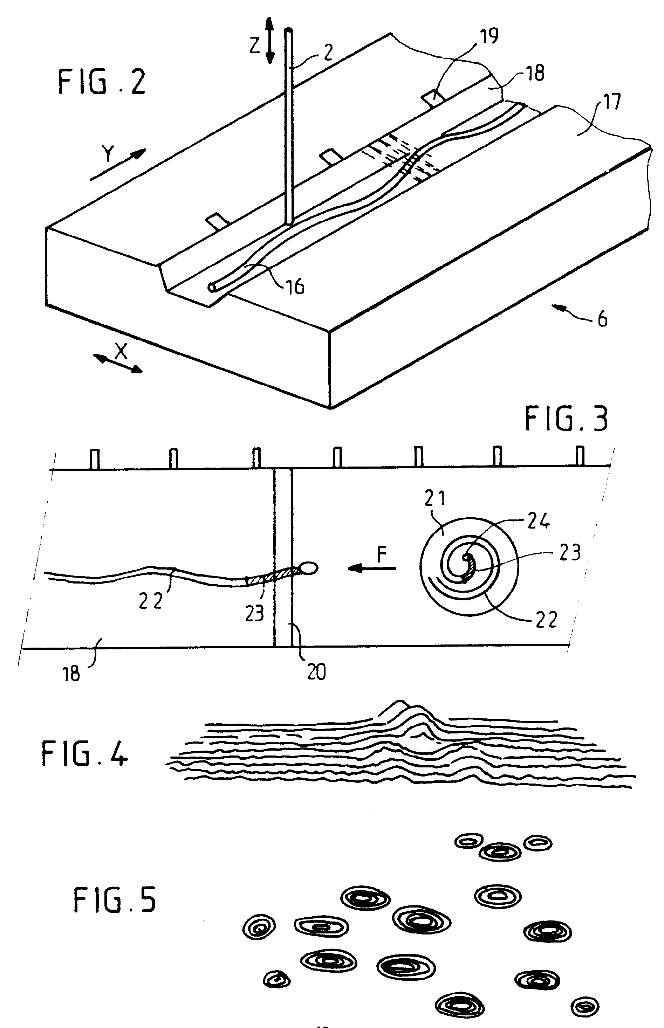

Le cristal piézo-électrique P_{Z} est commandé par un asservissement 5 tendant à maintenir constant le courant qui circule entre la sonde 2 et soit le substrat soit le polynucléotide 16 (figure 2) lorsqu'une différence de potentiel est appliquée entre cette sonde et le substrat ou le polynucléotide.

Les coordonnées X, Y et Z de l'extrémité de la sonde 2 sont échantillonnées dans un échantillonneur 10 dont la sortie est appliquée en entrée d'une unité de traitement 11.

L'unité de traitement 11 se compose essentiellement d'un module 12 de reconstitution de l'image, d'un module de traitement d'images 13, et d'un module de reconnaissance 14.

Le module 12 permet à partir des données échantillonnées de reconstituer une image en plan de la surface du substrat et du fragment d'acide nucléique qui y est déposé.

L'unité de traitement 13 vise à éliminer de l'image ainsi obtenue, l'image des atomes du substrat et des atomes des groupements phosphoryle et ribose ou désoxyribose de sorte que ne restent sur l'image que les noyaux puriques ou pyrimidiques ainsi que les atomes du marqueur éventuellement utilisé pour distinguer les deux bases de type purique l'une de l'autre ainsi que les deux bases de type pyrimidique. Ceci peut être obtenu à l'aide d'un programme de traitement d'images comme il en existe dans de nombreux domaines techniques.

Enfin le module 14 de reconnaissance a pour fonction de reconnaitre successivement chaque base.

Le résultat ainsi obtenu est mémorisé dans une unité de mémorisation 15 qui contient par conséquent à la fin de l'opération, la séquence des bases du polynucléotide séquencé par le procédé selon l'invention.

Dans le cas présent, le substrat 6 est constitué par un cristal de graphite obtenu par exemple par épitaxie, de sorte que sa surface 17 ne présente pas de défaut.

Une rainure 18 est formée à la surface 17 du substrat 6 par les techniques connues en microélectronique.

En outre des repères 19 sont gravés à intervalles réguliers le long de la rainure également par des moyens connus.

Le substrat comporte par ailleurs un puits (non représenté) à chaque extrémité de la rainure 18 afin d'immerger deux électrodes permettant de créer un champ électrique dans une solution baignant ces puits et la rainure.

La rainure peut par exemple présenter une largeur d'environ 2 microns pour une profondeur d'environ 100 nanomètres.

Enfin le fond de la rainure est dopé sous la forme d'une bande perpendiculaire à la rainure et d'une largeur d'environ 100 nonomètres, soit d'une charge électrostatique, soit de groupes fonctionnels présentant une forte réactivité avec les groupes fonctionnels greffés en extrémité du polynucléotide.

L'obtention de la charge électrostatique peut être obtenue soit par arrachement d'électrons réalisés directement avec un microscope à effet tunnel, soit par le dépôt d'une couche moléculaire d'une molécule ou le dépôt d'une macromolécule chargée ou d'un amas de molécules chargées.

On déposera par exemple une couche monomoléculaire de formule générale CH₃(CH₂)ₙ₋₂COOH avec n compris entre 16 et 22, cette couche monomoléculaire recevant des groupes fonctionnels insérés en surface (technique de Langmuir - Blotgett).

Une micro-goutte 21 est déposée dans la rainure 18 en amont de la barrière 20 dans le sens de migration, dans une solution baignant la rainure.

Cette micro-goutte contient le polynucléotide à séquencer 22 à une extrémité duquel a été synthétisé un fragment 23 de séquence connue, et un groupement fonctionnel 24 chargé positivement.

Du fait du champ électrique règnant dans la solution qui baigne la rainure, la micro-goutte se déplace vers la barrière 20 qui, dans le cas présent est chargée positivement.

Le groupement 24 est par conséquent retenu en amont de la barrière 20, le polynucléotide 22 continuant à s'étirer en aval de cette barrière.

Dans le cas où le polynucléotide est un double brin, on procède comme décrit précédemment, afin de séparer les deux brins, et on évapore la solution baignant la rainure.

On amène alors l'extrémité de la sonde 2 au voisinage du fond de la rainure, et on opère avec cette sonde un balayage primaire en X sur la largeur de la rainure 18, et un balayage secondaire en Y en maintenant constante la distance de la pointe de la sonde 2 à la surface.

On obtient alors un enregistrement du type de celui représenté à la figure 4.

On échantillonne au fur et à mesure du balayage les valeurs de X, Y et Z avec une précision qui, dans l'état actuel de la technique peut être de l'ordre de 0,1 angström, et on entre les données ainsi obtenues dans l'unité de traitement.

Après traitement on obtient une image, telle que celle représentée à la figure 5, qui peut être reconnue par le module 14 de reconnaissance de forme.

Le procédé selon l'invention permet par conséquent d'analyser extrèmement rapidement un long fragment d'acide nucléique. Le traitement des données recueillies peut s'effectuer en temps réel, auquel cas avec les techniques actuelles de reconnaissance de formes le balayage doit être relativement lent, mais une autre possibilité consiste à ne réaliser le traitement qu'en temps différé, auquel cas l'analyse peut être effectuée à grande vitesse.

Enfin on notera que ce procédé est non destructif et que l'on peut par conséquent réaliser autant de contrôles qu'on le souhaite sur le même échantillon.

## Revendications

1. Procédé de séquençage d'un polynucléotide, dans lequel on dispose ledit polynucléotide sur un substrat, on effectue, avec une résolution inférieure à un diamètre atomique, une analyse ponctuelle par balayage de la surface du substrat portant ledit polynucléotide, on reconstitue la forme de chaque base successive dudit nucléotide à partir des données recueillies au cours de l'analyse, on reconnaît ladite forme et l'on mémorise l'information ainsi obtenue, caractérisé par le fait que l'on effectue ladite analyse avec le polynucléotide sous forme de monobrin.

2. Procédé selon la revendication 1, caractérisé par le fait que pour disposer ledit polynucléotide sur le substrat, on solidarise une des extrémités du polynucléotide avec le substrat.

3. Procédé selon la revendication 2, caractérisé par le fait que pour disposer ledit polynucléotide sur le substrat, on accroche une de ses extrémités en un point du substrat.

4. Procédé selon la revendication précédente 3, caractérisé par le fait que pour accrocher ledit polynucléotide, on greffe à ladite extrémité et audit point du substrat des groupes fonctionnels portant des charges électrostatiques.

5. Procédé selon la revendication précédente 4, caractérisé par le fait qu'à l'autre extrémité du polynucléotide, on greffe un groupe fonctionnel de charge opposée.

6. Procédé selon la revendication 3, caractérisé par le fait que pour accrocher ledit polynucléotide, on greffe à ladite extrémité et audit point du substrat des groupes fonctionnels susceptibles de former une liaison covalente.

7. Procédé selon l'une quelconque des revendications 4 et 6, caractérisé par le fait que l'on greffe ledit groupement fonctionnel à l'extrémité d'une séquence prédéterminée synthétisée à l'extrémité du polynucléotide à séquencer proprement dit.

8. Procédé selon l'une quelconque des revendications 1 à 7, caractérisé par le fait que l'on dispose ledit polynucléotide en un emplacement précis sur le substrat.

9. Procédé selon la revendication précédente 8, caractérisé par le fait que le substrat est muni de moyens de repérage.

10. Procédé selon l'une quelconque des revendications 8 et 9, caractérisé par le fait que l'on dispose ledit polynucléotide dans une rainure formée sur ledit substrat.

11. Procédé selon l'une quelconque des revendications 2 à 10, caractérisé par le fait qu'après solidarisation, on effectue un étalement du polynucléotide.

12. Procédé selon la revendication précédente 11, caractérisé par le fait que pour procéder audit étalement, on place le polynucléotide dans le courant d'un fluide.

13. Procédé selon l'une quelconque des revendications 11 et 12, caractérisé par le fait que l'on effectue ledit étalement sous l'effet d'un champ électrique.

14. Procédé selon l'une quelconque des revendications précédentes, caractérisé par le fait que pour disposer le polynucléotide sur le substrat, on le fait migrer par gradient de potentiel dans une solution baignant ce substrat.

15. Procédé selon l'une quelconque des revendications 2 à 14, caractérisé par le fait que l'on part d'un polynucléotide double brin et qu'après solidarisation avec le substrat, on sépare les deux brins.

16. Procédé selon la revendication précédente 15, caractérisé par le fait que pour séparer les deux brins, on coupe l'un des brins.

17. Procédé selon la revendication précédente 16, caractérisé par le fait que l'on coupe l'un des brins à son extrémité.

18. Procédé selon la revendication 7 et selon l'une quelconque des revendications 16 et 17, caractérisé par le fait que ladite séquence synthétisée est choisie de façon à permettre une coupure spécifique d'un des brins par une enzyme de restriction.

19. Dispositif de séquençage d'un polynucléotide, caractérisé par le fait qu'il comprend en combinaison un substrat, des moyens d'analyse ponctuels par balayage avec une résolution inférieure à un diamètre atomique, de la surface du substrat, des moyens pour reconstituer les formes à partir des données de ladite analyse, des moyens pour reconnaître lesdites formes, des moyens pour mémoriser l'information ainsi obtenue, et des moyens d'accrochage et d'étalement dudit polynucléotide sur le substrat.

20. Dispositif selon la revendication précédente 19, caractérisé par le fait que lesdits moyens de reconstitution et de reconnaissance de forme comprennent une unité de traitement agencée pour reconstituer une image en plan de la surface, des moyens de traitement d'image et des moyens de reconnaissance d'image.

## Patentansprüche

1. Verfahren zur Sequenzanalyse eines Polynucleotids, bei dem das Polynucleotid auf ein Substrat aufgebracht und bei einer Auflösung, die unterhalb des Durchmessers eines Atoms liegt, eine Punkt-für-Punkt-Analyse durch Überstreichen der Substratoberfläche mit dem darauf aufgebrachten Polynucleotid durchgeführt wird, wobei der Aufbau jeder Base des Nucleotids in der richtigen Reihenfolge anhand der im Verlauf der Analyse gewonnenen Daten rekonstituiert, diese Form bzw. dieser Aufbau erkannt und die so erhaltene Information gespeichert wird, dadurch gekennzeichnet, daß die Analyse an dem Polynucleotid in Form eines Einzelstranges vorgenommen wird.

2. Verfahren gemäß Anspruch 1, dadurch gekennzeichnet, daß zum Aufbringen des Polynucleotids auf dem Substrat eines der Enden des Polynucleotids auf dem Substrat verankert wird.

3. Verfahren gemäß Anspruch 1, dadurch gekennzeichnet, daß zum Aufbringen des Polynucleotids auf dem Substrat eines seiner Enden auf einem Punkt des Substrats befestigt wird.

4. Verfahren gemäß dem vorhergehenden Anspruch 3, dadurch gekennzeichnet, daß zum Befestigen des Polynucleotids an dessen Ende und an dem entsprechenden Punkt des Substrats funktionelle Gruppen mit elektrostatischen Ladungen einbaut.

5. Verfahren gemäß dem vorhergehenden Anspruch 4, dadurch gekennzeichnet, daß an dem anderen Ende des Polynucleotids eine funktionelle Gruppe mit entgegengesetzter Ladung geknüpft wird.

6. Verfahren gemäß Anspruch 3, dadurch gekennzeichnet, daß zum Befestigen des Polynucleotids an dessen Ende und an dem besagten Punkt des Substrats funktionelle Gruppen angeknüpft werden, die zur Bildung einer kovalenten Bindung befähigt sind.

7. Verfahren gemäß einem der Ansprüche 4 und 6, dadurch gekennzeichnet, daß die funktionelle Gruppe am Ende einer vorherbestimmten Sequenz angehängt wird, welche an dem Ende des Polynucleotids zum Zweck einer exakten Sequenzierung synthetisiert worden ist.

8. Verfahren gemäß einem der Ansprüche 1 bis 7, dadurch gekennzeichnet, daß man das Polynucleotid auf dem Substrat an einer präzisen Stelle vorsieht.

9. Verfahren gemäß dem vorhergehenden Anspruch 8, dadurch gekennzeichnet, daß das Substrat mit Markierungsmitteln versehen wird.

10. Verfahren gemäß einem der Ansprüche 8 und 9, dadurch gekennzeichnet, daß das Polynucleotid in einer auf dem Substrat konischen Nut angebracht wird.

11. Verfahren gemäß einem der Ansprüche 2 bis 10, dadurch gekennzeichnet, daß nach dem Verankern eine Streckung des Polynucleotids durchgeführt wird.

12. Verfahren gemäß dem vorhergehenden Anspruch 11, dadurch gekennzeichnet, daß zum Ausführen der Streckung das Polynucleotid in einem Flüssigkeitsstrom verbracht wird.

13. Verfahren gemäß einem der Ansprüche 11 und 12, dadurch gekennzeichnet, daß das Strecken unter der Einwirkung eines elektrischen Feldes bewirkt wird.

14. Verfahren gemäß einem der vorhergehenden Ansprüche, dadurch gekennzeichnet, daß zum Aufbringen des Polynucleotids auf dem Substrat dasselbe einen Konzentration(Spannungs)gradienten in einer Lösung passieren läßt, in dem das Substrat eingetaucht ist.

15. Verfahren gemäß einem der Ansprüche 2 bis 14, dadurch gekennzeichnet, daß von einem doppelsträngigen Polynucleotid ausgegangen wird und nach der Verankerung auf dem Substrat die beiden Stränge aufgetrennt werden.

16. Verfahren gemäß dem vorhergehenden Anspruch 15, dadurch gekennzeichnet, daß man einen der Stränge zum Auftrennen beider Stränge durchschneidet.

17. Verfahren gemäß dem vorhergehenden Anspruch 16, dadurch gekennzeichnet, daß man einen der Stränge an dessen Ende durchtrennt.

18. Verfahren gemäß Anspruch 7 und gemäß einem der Ansprüche 16 und 17, dadurch gekennzeichnet, daß die synthetisierte Sequenz in der Weise ausgewählt wird, daß ein spezieller Schnitt durch einen der Stränge mittels eines Restriktionsenzyms stattfindet.

19. Vorrichtung zur Sequenzanalyse eines Polynucleotids, dadurch gekennzeichnet, daß diese jeweils ein Substrat, eine punktförmig angeordnete Vorrichtung zur Analyse durch Abtasten mit einer Auflösung, welche unterhalb des Durchmessers eines Atoms liegt, eine Substratoberfläche, eine Vorrichtung zum Rekonstituieren der Formen (des jeweiligen Aufbaus) anhand der Analysendaten, Vorrichtungen zum Erkennen dieser Formen (dieses Aufbaus), eine Vorrichtung zum Speichern der erhaltenen Informationen, sowie eine Vorrichtung zum Fixieren und Strecken des Polynucleotids auf dem Substrat jeweils in Kombination miteinander aufweist.

20. Vorrichtung gemäß dem vorhergehenden Anspruch 19, dadurch gekennzeichnet, daß die Mittel zum Rekonstituieren und zur Formerkennung eine Prozessiereinheit zum Bildaufbau gemäß Oberflächenverlauf, Mittel zur Bildverarbeitung und eine Vorrichtung zur Bilderkennung aufweist.

## Claims

1. Process for sequencing a polynucleotide, in which the said polynucleotide is placed on a substrate, point analysis is carried out, with a resolution of less than an atomic diameter, by scanning the surface of the substrate carrying the said polynucleotide, the shape of each successive base of the said nucleotide is reconstructed from data collected during the analysis, the said shape is recognized and the information thus obtained is stored, characterized by the fact that the said analysis is carried out with the polynucleotide in single-stranded form.

2. Process according to Claim 1, characterized by the fact that in order to place the said polynucleotide on the substrate, one of the ends of the polynucleotide is integrally attached to the substrate.

3. Process according to Claim 2, characterized by the fact that in order to place the said polynucleotide on the substrate, one of its ends is attached at a point on the substrate.

4. Process according to the preceding Claim 3, characterized by the fact that in order to attach the said polynucleotide, functional groups carrying electrostatic charges are grafted to the said end and to the said point on the substrate.

5. Process according to the preceding Claim 4, characterized by the fact that a functional group of opposite charge is grafted to the other end of the polynucleotide.

6. Process according to Claim 3, characterized by the fact that in order to attach the said polynucleotide, functional groups capable of forming a covalent bond are grafted to the said end and to the said point on the substrate.

7. Process according to either of Claims 4 and 6, characterized by the fact that the said functional group is grafted to the end of a predetermined sequence synthesized at the end of the polynucleotide to be sequenced proper.

8. Process according to any one of Claims 1 to 7, characterized by the fact that the said polynucleotide is placed at a precise location on the substrate.

9. Process according to the preceding claim, characterized by the fact that the substrate is provided with locating means.

10. Process according to either of Claims 8 and 9, characterized by the fact that the said polynucleotide is placed in a groove formed on the said substrate.

11. Process according to any one of Claims 2 to 10, characterized by the fact that after being attached integrally, the polynucleotide is spread out.

12. Process according to the preceding Claim 11, characterized by the fact that to carry out the said spreading, the polynucleotide is placed in the current of a fluid.

13. Process according to either of Claims 11 and 12, characterized by the fact that the said spreading is carried out under the effect of an electric field.

14. Process according to any one of the preceding claims, characterized by the fact that to place the polynucleotide on the substrate, it is caused to migrate by potential gradient in a solution bathing this substrate.

15. Process according to any one of Claims 2 to 14, characterized by the fact that a double-stranded polynucleotide is used as starting material and that after being integrally attached to the substrate, the two strands are separated.

16. Process according to the preceding Claim 15, characterized by the fact that to separate the two strands, one of the strands is cut.

17. Process according to the preceding Claim 16, characterized by the fact that one of the strands is cut at its end.

18. Process according to Claim 7, and according to either of Claims 16 and 17, characterized by the fact that the said synthesized sequence is chosen so as to permit specific cutting of one of the strands by a restriction enzyme.

19. Device for sequencing a polynucleotide, characterized by the fact that it comprises in combination a substrate, means for point analysis by scanning, with a resolution of less than an atomic diameter, the surface of the substrate, means for reconstructing the shapes from data from the said analysis, means for recognizing the said shapes, means for storing the information thus obtained, and means for fixing and spreading the said polynucleotide on the substrate.

20. Device according to the preceding Claim 19, characterized by the fact that the said shape reconstruction and recognition means comprise a processing unit designed to reconstruct a plane image of the surface, image processing means and image recognition means.
